# EUROPEAN PATENT APPLICATION

(11) **EP 0 846 629 A1**
(43) Date of publication of application: **10.06.1998**
(21) Application number: 96203472.4
(22) Date of filing: 06.12.1996
(51) Int. Cl.: B65D 65/40, B32B 27/10

(54) **Flexible package for non-food substances**

(71) Applicant: THE PROCTER & GAMBLE COMPANY, Cincinnati, Ohio 45202 (US)
(72) Inventor: Deflander, Joseph Fernand, 3150 Espelaar (BE); Tercalavres, Constant Henri Karel, 3010 Leuven (BE)
(74) Representative: Mather, Peter Geoffrey

(57) **Abstract**

The present invention is a multi-layer material for forming into a package. The multi-layer material comprises a barrier layer and a heat sealable layer. The barrier layer is made of greaseproof paper. The multi-layer material further comprises a tie layer. The tie layer attaches the heat sealable layer and the barrier layer together.

## Description

### Field of the invention

The present invention relates to a multi-layer material for forming into packages, like refill packages, for containing dry laundry or household cleaning compositions.

### Background of the invention

A wide variety of single-use type packaging materials are known. Many of the packaging materials are in the form of materials made of different layers. The various layers allow to obtain a composite multi-layer material in a desired combination of properties otherwise not available from a single layer of a single composition.

The layers can be variably chosen in function of the protection needed for the contained material. In particular, for dry laundry compounds, which may be compositions sensitive to moisture and/or oxygen, the multi-layered material may comprise a barrier layer substantially preventing the passage of moisture and/or oxygen through the material. The packaging technology is in need of being able to develop a packaging material, that offers high oxygen and/or moisture barrier characteristics.

Granular detergents may be transported and delivered to the consumer also in flexible bags, so-called refill packages, instead of the commonly used cartons. These bags are made of pliable and flexible material. This pliable and flexible material has to be such that cracking and/or fissures are avoided to efficiently contain granular substances. Indeed, cracking and fissures may otherwise facilitate or enable the passage of oxygen and/or moisture through the material. Consequently, such a pliable material and the corresponding bag may lose the barrier characteristics beneficial for a good storage of the content. Furthermore, part of the content may be lost during transportation through the cracking and/or fissures. Therefore the packaging technology is further in need of a pliable packaging material, which is less susceptible to cracking or fissures.

WO 91/15410 describes a gas tight packaging material comprising a grease repellent layer of greaseproof paper and at least one layer of plastic material of the polyolefine kind. The greaseproof paper is coated on the inside with a layer of polyethylene and laminated on the outside with a thin pre-printed paper. The coating of the polyethylene on the greaseproof paper is made by extruding or melting the polyethylene into the pores of the greaseproof paper. However, extrusion of plastic material is expensive and complicated in the manufacturing packaging material. Indeed, extrusion implies that a plastic layer is applied on another layer in a molten state. Therefore, a high temperature is needed. For example, in WO 91/15410 temperatures between 290°C and 330°C are used for the extrusion. Therefore the packaging technology is in need of a cost efficient multi-layer material for packages having oxygen and/or moisture barrier properties.

It is therefore an object of the present invention to provide a multi-layer material comprising a layer of greaseproof paper to achieve sufficient oxygen and/or moisture tightness properties, the multi-layer material having improved resistance to cracking and fissures and reduced manufacturing costs.

A further object of the present invention is a method of manufacture of the multi-layer material. An even further object of the present invention is a package made of the multi-layer material according to the present invention. A final object of the present invention is the use of the package made of the multi-layer material according to the present invention.

### Summary of the invention

The present invention is a multi-layer material for forming into a package. The multi-layer material comprises a barrier layer and a heat sealable layer. The barrier layer is made of greaseproof paper. The multi-layer material further comprises a tie layer. The tie layer attaches the heat sealable layer and the barrier layer together.

### Detailed description of the invention

The multi-layer material according to the present invention comprises at least a layer of greaseproof paper. The greaseproof paper has substantial barrier properties against passage of oxygen and moisture. It has been further found that greaseproof paper has substantial barrier characteristics against passage of odours or aromas. Furthermore, a layer of greaseproof paper is cost efficient with respect for example of ethylene vinyl alcohol copolymer (= EVOH). Therefore, the greaseproof paper is an ideal substitute e.g. to EVOH or to an aluminium foil. Furthermore, the greaseproof paper is considered as an environmentally friendly material. In order to achieve the best possible barrier effect the greaseproof paper should have low oxygen permeability. Preferably, the greaseproof paper is chosen to have an oxygen permeability of lower than 200 cm³/m²/day. The basis weight of the greaseproof paper is preferably between about 20 g/m² to about 80 g/m², more preferably about 40 g/m².

According to the present invention at least a heat sealable layer is attached to one side of the greaseproof paper. The heat sealable layer is attached on that side of the greaseproof paper which becomes the inner layer of a package when the multi-layer material is formed into a package. The heat sealable layer may be made of heat sealable materials like polyolefins. Preferred polyolefins are polyethylene and polypropylene. Another possible heat sealable material is a heat sealable lacquer. An example of a heat sealable lacquer is a lacquer made of water-based or solvent free acrylic. Preferably, the thickness of the heat sealable layer material is between about 1 µm to about 20 µm, more preferably of from 1.5 to 5 µm and most preferably of from 2 to 3 µm.

The attachment between the greaseproof paper and the heat sealable layer is achieved according to the present invention by a tie layer. The tie layer may be glue applied between the greaseproof paper and the heat sealable layer. Preferably, the tie layer is made of polyurethane-based adhesives. By polyurethane-based adhesives we intend all the adhesives based on polyurethane known to the person skilled in the art. The polyurethane based adhesives comprise solvent-based (e.g. water-based) or solvent-free adhesives. Preferably, one component or two component systems are suitable for the purpose of the present invention. It has been found that these polyurethane based adhesives can be applied via a lamination process onto the greaseproof paper. Furthermore, it has been found that this laminated polyurethane based adhesives provide a sufficient bonding between the greaseproof paper and the other layers of the multi-layer material according to the present invention. The lamination of the polyurethane-based adhesives is a cost efficient way to bond the greaseproof paper to other layers of the multi-layer material. This tie layer can be also applied on both sides of the greaseproof paper. Preferably, the thickness of the tie layer is up to about 10 µm, more preferably between about 1 µm to about 5 µm, most preferably about 2 µm.

It has been found that the multi-layer material according to the present invention is pliable, not susceptible to cracking and fissures. Furthermore, it has been found that the multi-layer material according to the present invention shows a oxygen barrier characteristic of about 3 times better than when replacing the greaseproof paper layer with an EVOH layer. Furthermore, it has been found that the multi-layer material according to the present invention shows a oxygen barrier characteristic of about 25 times better than when replacing the greaseproof paper layer with a layer made of oriented PET. It has been measured also the moisture barrier properties of the multi-layer material according to the present invention. It has been found that the multi-layer material according to the present invention is about 3 to 4 times better than standard laminates, like paper and PE layers laminates not comprising greaseproof paper. Furthermore, it has been found that a multi-layer material comprising greaseproof paper is more cost effective with respect to a multi-layer material in which the greaseproof paper is substituted by EVOH. Indeed, the greaseproof paper has a reduced cost with respect to EVOH.

Preferably, the multi-layer material according to the present invention comprises other layers. The other layers may be preferably selected from the group consisting of: paper, plastic materials, lacquers and a combination thereof. As plastic materials polyolefines, like polyethylene (=PE), or (oriented) polyethylene terephthalate, or (oriented) polypropylene or a combination thereof, may be used. Preferably, the thickness of the layers made of plastic material is between about 10 µm to about 100 µm. One or more layers of paper which allow high quality printing may be also used alone or in combination with the plastic layers mentioned before. Preferably, the density of the layers made of paper is between about 50 g/m² to about 200 g/m², more preferably about 80 g/m². Also a layer of lacquers or sealable lacquers may be used in combination with the paper or plastic layers. Preferably, the thickness of the layers made of a lacquer material is between about 1 µm to about 20 µm, more preferably of from 1.5 to 5 µm and most preferably of from 2 to 3 µm.

The manufacturing of the multi-layer material according to the present invention can be made on usual laminating machines. This process is called lamination process. In a lamination process the different layers are attached to each other in a solid state, i.e. the different layers do not need to be melt and applied on another layer in a molten state. Consequently, low temperatures, lower than 200 °C or preferably at ambient temperature, are sufficient. Therefore, the cost of the manufacture of the multi-layer material according to the present invention is substantially reduced. The reduction in manufacturing costs does not substantially reduce the oxygen and/or moisture barrier properties of the multi-layer material with respect to a layer extruded into the pores of the greaseproof paper.

For the multi-layer material according to the present invention, the tie layer is preferably applied as a uniform layer on one side of the greaseproof paper or of the heat sealable layer. The greaseproof paper and the heat sealable layer are then bonded together by means of pressure. This may be repeated on any other free side of the greaseproof paper or heat sealable layer to attach other layers on the multi-layer material of the present invention.

The multi-layer material according to the present invention are able to be reformed into flexible packages. These packages may be manufactured according to the methods well known to the man skilled in the art, and described for example in the U.S. Patent No. 3 380 646 or in the European Application No. 93870118.2. The process may be a continuous, a semi-continuous or a multi-step batch process. The heat sealable layer of the multi-layer material according to the present invention is preferably the innermost layer when the multi-layer material is formed into a package.

The use of the package according to the present invention is various. It can be used for any dry product which is susceptible to quality degeneration. Preferably the use is for dry non-food products in general, more preferably for granular detergent compositions. Loosing the perfume to the atmosphere or letting moisture penetrate and contact the contained substance easily degenerates the detergent composition. In particular, the package is adequate to contain also dry laundry additives such as sodium percarbonate, sodium perborate and olefins. These dry laundry additive may be separate from or mixed with a granular detergent. Such compounds are typically present in laundry or household cleaning and bleaching compositions and are generally very sensitive to moisture.

In the following various examples of multi-layer material are described, without limiting the scope of the present invention. The different multi-layer materials are classified according to the present invention in two groups depending on the total percentage weight of paper (including the greaseproof paper layer(s)) with respect to the other layers of the multi-layer material:
(A) multi-layer materials made of at least 80 % weight of paper (=paper laminates);
(B) multi-layer materials made of less than 80 % weight of paper (=plastic laminates).

The different layers are described in the following Examples from the view of a cross sectional cut through the multi-layer material going from one outermost layer to the opposite outermost layer.

Following are examples of paper laminates:
- **Example 1**: Greaseproof Paper / Tie layer/ Paper/ Tie layer/ PE
   The greaseproof paper has a basis weight of 40 g/m², whereby the paper layer has basis weight of 80 g/m². The two tie layers are 2 µm thick, whereby the PE-layer is 30 µm thick.
- **Example 2**: Greaseproof Paper/ Tie layer/ Paper/ PE
   The basis weight of the greaseproof paper and of the paper layer and the thicknesses of the tie layer and of PE is the same as for Example 1.
- **Example 3**: Paper/ Tie layer/ Greaseproof Paper/ Tie layer/ PE
   The basis weight of the greaseproof paper and of the paper layer and the thicknesses of the tie layers and of PE is the same as for Example 1.
- **Example 4**: Paper/ PE/ Greaseproof Paper/ Tie layer/ PE
   The PE-layer attached between the paper layer and the greaseproof paper layer has a thickness of 10 µm. Otherwise the basis weight of the greaseproof paper and of the paper layer and the thicknesses of the tie layer and of the other PE is the same as for Example 1.
- **Example 5**: Paper/ Tie layer/ Greaseproof Paper/ PE
   The basis weight of the greaseproof paper and of the paper layer and the thicknesses of the tie layers and of PE is the same as for Example 1.
- **Example 6**: Paper/ Tie layer/ Greaseproof Paper/ Sealable Lacquer
   The basis weight of the greaseproof paper and of the paper layer and the thicknesses of the tie layer and of PE is the same as for Example 1. The thickness of the sealable layer is 5 µm.

Following are examples of plastic laminates:
- **Example 7**: Greaseproof Paper/ Tie layer/ PE
   The greaseproof paper has a basis weight of 40 g/m². The tie layer is 2 µm thick, whereby the PE-layer is 30 µm thick.
- **Example 8**: PE/ Tie layer/ Greaseproof Paper/ Tie layer/ PE
   The basis weight of the greaseproof paper and of the paper layer and the thicknesses of the tie layers and of PE is the same as for Example 7.
- **Example 9**: PE/ Tie layer/ Greaseproof Paper/ Sealable Lacquer
   The basis weight of the greaseproof paper and the thicknesses of the tie layer and of PE is the same as for Example 7. The thickness of the sealable layer is 10 µm.

## Claims

1. A multi-layer material for forming into a package, the multi-layer material comprising a barrier layer and a heat sealable layer, the barrier layer being made of greaseproof paper, characterized in that the multi-layer material further comprises a tie layer, the tie layer attaching the heat sealable layer and the barrier layer together.

2. A multi-layer material according to claim 1 characterized in that the multi-layer material comprises another layer of material selected from the group consisting of: polyethylene, paper, sealable lacquer and combination thereof.

3. A multi-layer material according to claim 2 characterized in that the greaseproof paper is between the heat sealable layer and another layer.

4. A method of making a multi-layer material according to any of the preceding claims comprises the steps of:
a) applying on at least one side of a greaseproof paper a tie with a lamination process;
b) applying on the tie layer a heat sealable layer with a lamination process;
c) optionally, applying another layer of material selected from the group consisting of: polyethylene, paper, sealable lacquer and combination thereof on the other side of the greaseproof paper opposite the heat sealable layer.

5. A package formed from a multi-layer material according to any of claims 1 to 4 whereby the heat sealable layer is the innermost surface of the package.

6. Use of a package according to claim 5 for containing granular detergent and/or dry laundry additive.

7. Use of a package according to claim 6 characterized in that the granular detergent and/or the dry laundry additive comprises compounds selected from the group consisting of: sodium percarbonate, sodium perborate, olefins and mixtures thereof.
